# EUROPÄISCHE PATENTANMELDUNG

(11) **EP 3 939 695 A1**
(43) Veröffentlichungstag der Anmeldung: **19.01.2022**
(21) Anmeldenummer: 20185754.7
(22) Anmeldetag: 14.07.2020
(51) Int. Cl.: B01F 5/04, B01F 5/06, B01F 15/00

(54) **VORRICHTUNG UND VERFAHREN ZUR ZUGABE UND EINMISCHUNG EINES ZUSATZMITTELS IN EIN HYDRAULISCH ABBINDBARES GEMISCH**

(71) Anmelder: SIKA TECHNOLOGY AG, 6340 Baar (CH)
(72) Erfinder: Schnider, Beat, 6005 Luzern (CH); Meier, Heinz, 8032 Zürich (CH); Rieger, Carsten, 8046 Zürich (CH)
(74) Vertreter: Sika Patent Attorneys

(57) **Zusammenfassung**

Eine Vorrichtung (100) zur Zugabe und Einmischung eines Zusatzmittels in ein hydraulisch abbindbares Gemisch, umfasst einen rohrförmigen Hohlraum (130) zum Durchleiten des hydraulisch abbindbaren Gemischs entlang einer vorgesehenen Flussrichtung (133), wobei ein statisches strömungsbeeinflussendes Element (150) in den Hohlraum (130) hineinragt, an welchem eine in den Hohlraum (130) mündende Öffnung (160) zum Einleiten des Zusatzmittels vorliegt.

## Beschreibung

### Technisches Gebiet

Die Erfindung betrifft eine Vorrichtung zur Zugabe und Einmischung eines Zusatzmittels in ein hydraulisch abbindbares Gemisch sowie eine Anordnung zum Fördern eines hydraulisch abbindbaren Gemischs. Weiter bezieht sich die Erfindung auf die Verwendung derartiger Vorrichtungen bei der Herstellung von Formkörpern durch additive Fertigung und/oder beim Ausbringen von Spritzbeton oder Spritzmörtel. Ebenfalls Gegenstand der Erfindung ist ein Verfahren zur Zugabe und Einmischung eines Zusatzmittels in ein hydraulisch abbindbares Gemisch.

### Stand der Technik

Das Zudosieren bzw. Zumischen von kleinen Mengen eines Stoffes, z.B. eines Zusatzmittels, in ein pumpfähiges Gemisch, ist bei vielen Anwendungen unerlässlich. Eine gute Durchmischung ist jedoch oftmals schwierig zu erreichen, dies insbesondere bei heterogenen Gemischen mit Feststoffanteilen. Problematisch ist insbesondere die Zudosierung von Zusatzmitteln in hydraulisch abbindbare Gemische, welche üblicherweise einen relativ hohen Feststoffanteil in Form von Sand, Kies und Zement mit ganz unterschiedliche Korngrössen und Formen aufweisen können. Erschwert wird die Zusatzmittel-Zugabe insbesondere dadurch, dass hydraulisch abbindbare Gemische, wie z.B. Beton, eine extrem kompakte Masse darstellen, welche flüssige Zusatzmittel nicht ohne Zutun aufnehmen.

Bekannt zur Zumischung von Zusatzmitteln ist beispielsweise die Verwendung von dynamischen Mischvorrichtungen. Dabei kann das Zusatzmittel dem in einem Behälter vorliegenden hydraulisch abbindbaren Gemisch in einem Batch-Verfahren zugegeben und mit rotierenden Mischelementen untergemischt werden. Eine kontinuierliche Bereitstellung von hydraulisch abbindbaren Gemischen ist aber mit einem Batch-Verfahren nicht möglich. Zudem steigt beim Batch-Verfahren mit zunehmender Produktionsmenge der Platzbedarf.

Ebenfalls bekannt ist die Verwendung von aufgeweiteten Rohrleitungen, in welchen das Zusatzmittel während der Förderung mit darin angeordneten rotierenden Mischelementen in das hydraulisch abbindbare Gemisch eingemischt werden kann.

Die DE 202 15 662 U1 (Tachus AG) beschreibt beispielsweise eine Mischvorrichtung in Form eines länglichen Rohrs, bei welcher getrennt flüssiger Beton und Beschleuniger zugeführt und nach dem Vermischen über einen separaten Auslass weitergleitet werden können. Die Mischung erfolgt dabei durch rotierende Mischelemente. Mit dem System der DE 202 15 662 U1 lässt sich in einem kontinuierlichen Prozess schnell abbindender Beton herstellen, welcher anschliessend mittels Schalungen zu Betonteilen verbaut werden kann.

Dynamische Mischer mit rotierenden Teilen, Dichtungen und Antrieben sind jedoch fehleranfällig und erfordern einen hohen Wartungsaufwand.

Da die Zuschläge in Betonzusammensetzungen im Vergleich zu typischen Leitungsdurchmessern zudem sehr gross sein können, besteht eine erhöhte Gefahr, dass sich die Zuschläge in den rotierenden Mischelementen verklemmen und die Förderung abrupt blockiert und unterbrochen wird (sogenannte "Stopfer").

Ein anderer Ansatz zur Zudosierung wird bei der Verarbeitung von Spritzbeton verfolgt. Hierbei durchströmt der Spritzbeton mit hoher Geschwindigkeit eine Förderleitung mit aufgesetzter Spritzdüse. Notwendige Rezepturbestandteile, wie z.B. Wasser (bei Trockenspritzbeton), Druckluft und Zusatzmittel (z.B. Erstarrungsbeschleuniger) werden dann unmittelbar vor der Spritzdüse eingedüst und vermischen sich unter anderem während dem Flug von der Düse zur Auftreffstelle als auch beim Auftreffen mit den weiteren Betonbestandteilen.

Die EP 1 570 908 A1 (Sika Technology AG) offenbart in diesem Zusammenhang z.B. eine Spritzbetondüse zum Aufbringen von Nassspritzbeton oder Trockenspritzbeton. Die Düse verfügt über seitliche Öffnungen, über welche ein Zusatzmittel in den Spritzbeton zudosiert werden kann.

Derartige Düsen weisen zwar keine rotierenden Mischelemente auf, sie sind aber nicht geeignet, um beispielsweise Schalungsbeton für massivere Betonbauteile bereitzustellen, da die Zusatzmittel nicht ausreichend homogen in die Betonzusammensetzung eingemischt werden können.

Es besteht daher weiterhin Bedarf nach neuen Ansätzen und verbesserten Lösungen, welche die vorstehend genannten Nachteile möglichst nicht aufweisen.

### Darstellung der Erfindung

Aufgabe der vorliegenden Erfindung ist es, verbesserte Vorrichtungen und Verfahren zur Zumischung eines Zusatzmittels in ein hydraulisch abbindbares Gemisch bereitzustellen. Bevorzugt soll eine Lösung gefunden werden, mit welcher ein Zusatzmittel vor dem Austritt aus einer Auslassdüse möglichst homogen und kontrolliert in ein hydraulisch abbindbares Gemisch eingemischt werden kann. Die Lösung soll für unterschiedliche hydraulisch abbindbare Gemische und möglichst unabhängig von der Verarbeitungstechnik einsetzbar sein.

Überraschenderweise werden diese Aufgaben durch eine Vorrichtung gemäss Anspruch 1 gelöst. Kern der Erfindung ist demnach eine Vorrichtung zur Zugabe und Einmischung eines Zusatzmittels in ein hydraulisch abbindbares Gemisch, umfassend einen rohrförmigen Hohlraum zum Durchleiten des pumpfähigen Gemischs entlang einer vorgesehenen Flussrichtung, wobei ein statisches strömungsbeeinflussendes Element in den Hohlraum hineinragt, an welchem eine in den Hohlraum mündende Öffnung zum Einleiten des Zusatzmittels vorliegt.

Wie sich überraschend herausgestellt hat, kann durch das statische strömungsbeeinflussende Element und der daran angeordneten Öffnung das Zusatzmittel direkt in die inneren Bereiche des hydraulisch abbindbaren Gemisch eingebracht und zugleich innerhalb kurzer Strecke homogen im Gemisch verteilt werden. Dies führt zu einer sehr effektiven Vermischung. Da das strömungsbeeinflussende Element ein statisches Element ohne bewegliche Teile ist, ist die Fehleranfälligkeit und der Wartungsaufwand im Vergleich mit dynamischen Mischsystemen deutlich geringer.

Es hat sich zudem gezeigt, dass sich die erfindungsgemässe Vorrichtung im Zusammenhang mit verschiedenen Verarbeitungstechniken eingesetzt werden kann. So ist es z.B. möglich, Zusatzmittel in Betonzusammensetzungen beizugeben, welche in herkömmlicher Art und Weise über Rohrleitungen in Schalungen abgefüllt werden. Damit kann beispielsweise langzeitig verzögerter Beton während der Förderung mit einem flüssigen Beschleuniger aktiviert werden, so dass der Abbindevorgang gestartet wird. Ebenfalls geeignet ist die erfindungsgemässe Vorrichtung zur Zumischung von Zusatzmitteln bei der additiven Fertigung, z.B. 3D-Druck, von Formkörpern. Dabei kann das Zusatzmittel, wie beispielsweise ein Beschleuniger oder ein Verdickungsmittel, direkt vor dem Druckkopf in die Förderleitung zugegeben werden. Dabei hat sich die erfindungsgemässe Vorrichtung als besonders vorteilhaft erwiesen, da das Zusatzmittel trotz der hohen Viskosität der üblicherweise verwendeten hydraulisch abbindbaren Gemische effizient und homogen beigemischt werden kann.

Weiter kann die erfindungsgemässe Vorrichtung aber auch für eine Ausbringung von hydraulisch abbindbaren Gemischen im Trocken- oder Nassspritzverfahren eingesetzt werden.

Die erfindungsgemässe Vorrichtung kann somit äusserst flexibel eingesetzt werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der Erfindung betrifft eine Vorrichtung zur Zugabe und Einmischung eines Zusatzmittels in ein hydraulisch abbindbares Gemisch, umfassend einen rohrförmigen Hohlraum zum Durchleiten des pumpfähigen Gemischs entlang einer vorgesehenen Flussrichtung, wobei ein statisches strömungsbeeinflussendes Element in den Hohlraum hineinragt, an welchem eine in den Hohlraum mündende Öffnung zum Einleiten des Zusatzmittels vorliegt.

Beim "hydraulisch abbindbaren Gemisch" handelt es sich um ein Gemisch enthaltend ein hydraulisches Bindemittel, welches in Anwesenheit von Wasser in einer Hydratationsreaktion zu festen Hydraten oder Hydratphasen reagiert. Bevorzugt enthält das Gemisch zudem Aggregate, Wasser und optional Additive.

Das hydraulische Bindemittel kann z.B. ausgewählt sein aus mineralischen und/oder organischen Bindemitteln. Beispielsweise umfasst das Bindemittel Zement, Kalk, hydraulischer Kalk oder Gips, je alleine, als Mischung aus mehreren der genannten Bindemittel oder in Abmischung mit latent hydraulischen Bindemitteln und/oder Pozzolanen. Aggregate liegen insbesondere in Form von Sand, Kies und/oder Gesteinskörnungen vor. Organische Bindemittel können z.B. Epoxid- oder Polyurethan-basierte Bindemittel sein.

Besonders bevorzugt handelt es sich beim hydraulisch abbindbaren Gemisch um eine Betonzusammensetzung oder eine Mörtelzusammensetzung.

Ein "Zusatzmittel" ist insbesondere eine Substanz, welche die physikalischen und/oder chemischen Eigenschaften des hydraulisch abbindbaren Gemisch zu verändern vermag. Bevorzugt handelt es sich um einen Erstarrungsbeschleuniger, Erhärtungsbeschleuniger und/oder einen Verdicker.

Unter einem "strömungsbeeinflussenden Element" wird vorliegend ein Körper verstanden, welcher in den Hohlraum hineinragt und die Strömung des durch den Hohlraum fliessenden hydraulisch abbindbaren Gemischs beeinflusst. Die Beeinflussung kann insbesondere in Form einer wenigstens teilweisen Änderung der Strömungsrichtung des Gemischs und/oder einer wenigstens teilweisen Auftrennung des Gemischs in Teilströme erfolgen.

Der Zusatz "statisch" bedeutet, dass das strömungsbeeinflussende Element unbeweglich an der Vorrichtung befestigt ist und während dem Durchleiten des hydraulisch abbindbaren Gemischs nicht bewegt wird.

Die Vorrichtung umfasst einen rohrförmigen Hohlraum. Insbesondere handelt es sich um ein zylindrisches Rohrstück mit einem Einlass und einem Auslass. Grundsätzlich kann die Vorrichtung aber auch eine andere Form aufweisen. Beispielsweise kann die Vorrichtung als ein quaderförmiges Element mit einer durchgehenden Bohrung vorliegen.

Die Vorrichtung besteht insbesondere aus Metall und/oder Kunststoff, insbesondere aus nichtrostendem Stahl.

Der rohrförmige Hohlraum zum Durchleiten des hydraulisch abbindbaren Gemischs hat bevorzugt die Form eines Kreiszylinders. Es sind aber auch andere Formen möglich. So kann der rohrförmige Hohlraum auch einen nicht kreisförmigen oder einen nicht runden Querschnitt aufweisen.

Bevorzugt verläuft im Innern des strömungsbeeinflussenden Elements ein Fluidkanal, über welchen das Zusatzmittel, insbesondere von einem Bereich ausserhalb des Hohlraums, zur Öffnung zum Einleiten des Zusatzmittels gefördert werden kann. Dies ermöglicht eine besonders kompakte Bauweise.

Es ist aber grundsätzlich auch möglich, das Zusatzmittel durch einen ausserhalb des strömungsbeeinflussenden Elements verlaufenden Fluidkanal zuzuführen.

Besonders bevorzugt liegt im Bereich des strömungsbeeinflussenden Elements an einer Aussenseite der Vorrichtung ein mit der Öffnung zum Einleiten des Zusatzmittels kommunizierender Fluideinlass vor, über welchen das Zusatzmittel zugeführt werden kann. Damit kann die Vorrichtung direkt mit einer Fördervorrichtung für das Zusatzmittel verbunden werden.

Es ist gemäss einer anderen Ausführungsform aber auch möglich, den Fluideinlass in einem anderen Bereich vorzusehen und über eine Fluidleitung zum strömungsbeeinflussenden Element zu führen.

Die in den Hohlraum mündende Öffnung ist bevorzugt derart ausgestaltet, dass das Zusatzmittel von einer Wandung des Hohlraums beabstandet in den Hohlraum eingeleitet werden kann. Insbesondere beträgt eine Distanz zwischen der Wandung und der Öffnung 25 - 70%, insbesondere 35 - 50%, des Durchmessers des rohrförmigen Hohlraums.

Damit kann das Zusatzmittel direkt in den inneren Bereich des durchgeleiteten hydraulisch abbindbaren Gemischs eingeleitet werden, was zu einer besonders effektiven Vermischung führt.

Insbesondere ist die in den Hohlraum mündende Öffnung derart ausgestaltet, dass das Zusatzmittel in einer Richtung im Wesentlichen entlang der longitudinalen Achse des rohrförmigen Hohlraums oder schräg dazu in den Hohlraum eingeleitet werden kann. Insbesondere wird das Zusatzmittel in einer Richtung, welche einen Winkel von 0 - 45°, insbesondere 15 - 30°, zur longitudinalen Achse des Hohlraums aufweist, eingeleitet. Damit kann das Zusatzmittel in Strömungsrichtung oder leicht schräg dazu zugegeben werden, was sich als vorteilhaft bezüglich einer möglichst raschen homogenen Verteilung herausgestellt hat.

Die in den Hohlraum mündende Öffnung ist bevorzugt derart ausgestaltet, dass das Zusatzmittel auf einer stromabwärtigen Seite des strömungsbeeinflussenden Elements in den Hohlraum eingeleitet werden kann. Mit anderen Worten liegt die in den Hohlraum mündende Öffnung bevorzugt auf der stromabwärtigen Seite des strömungsbeeinflussenden Elements vor. Damit kann einerseits verhindert werden, dass hydraulisch abbindbares Gemisch beim Durchleiten in die Öffnung gedrückt wird und zugleich kann der Druck, welcher zur Förderung des Zusatzmittels benötigt wird, minimiert werden.

Es ist aber auch möglich, die in den Hohlraum mündende Öffnung seitlich des strömungsbeeinflussenden Elements und/oder in einem stromaufwärtigen Bereich anzuordnen.

Bei Bedarf können auch mehrere Öffnungen in verschiedenen Bereichen des strömungsbeeinflussenden Elements angeordnet werden.

Gemäss einer besonders vorteilhaften Ausführungsform ist das strömungsbeeinflussende Element als zylinderförmiger Stutzen ausgestaltet, welcher mit seiner longitudinalen Achse in einer Richtung im Wesentlichen senkrecht zur longitudinalen Achse des Hohlraums oder in radialer Richtung des Hohlraums in diesen hineinragt. Insbesondere liegt dabei die in den Hohlraum mündende Öffnung auf der Stirnseite und/oder der Mantelfläche des zylinderförmigen Stutzens vor. Besonders bevorzugt ist eine Anordnung in einem stromabwärtigen Bereich der Mantelfläche.

Gemäss einer weiteren vorteilhaften Ausführungsform ist das strömungsbeeinflussende Element derart ausgestaltet, dass es entlang seiner in longitudinaler Richtung des Hohlraums verlaufenden Länge, insbesondere in Strömungsrichtung, kontinuierlich zunehmend weiter in den Hohlraum hineinragt.

Im Besonderen verfügt das strömungsbeeinflussende Element über eine vom stromaufwärtigen Ende zum stromabwärtigen Ende schräg zur Strömungsrichtung in den Hohlraum hinein verlaufende Anströmkante. Dies hat sich in Bezug auf die Mischwirkung als besonders vorteilhaft erwiesen. Zudem wird damit das Risiko des Verstopfens signifikant reduziert.

Gemäss einer besonders bevorzugten Ausführungsform ist das strömungsbeeinflussende Element als Finne, insbesondere als dreieckförmige Finne, ausgestaltet. Unter einer "Finne" wird insbesondere ein flächiges Element verstanden, welche eine gegenüber der Länge und der Höhe geringe Dicke aufweist. Die Dicke beträgt bevorzugt höchsten 25% der Länge oder der Breite.

Die Finne verfügt bevorzugt über eine Anströmkante und eine gegenüberliegende Hinterkante welche über zwei Seitenflächen, insbesondere zwei dreieckförmige Seitenflächen, verbunden sind.

Die Finne ist bevorzugt eine dreieckförmige Finne. Solche Finnen können z.B. in Form eines flächigen rechtwinkligen Dreiecks vorliegen. Dabei können eine oder mehrere Ecken abgerundet sein und/oder eine oder Kanten können gekrümmt sein.

Eine dreieckförmige Finne ist insbesondere derart angeordnet, dass mit einer ihrer Spitze in den Hohlraum hineinragt während eine der Spitze gegenüberliegende Seite der Finne an der Wandung des Hohlraums angeordnet ist.

Prinzipiell können aber auch anders geformte Finnen eingesetzt werden.

Die Finne ist im Bereich der Wandung des Hohlraums bevorzugt entlang der longitudinalen Achse des Hohlraums ausgerichtet oder sie weist gegenüber der longitudinalen Achse des Hohlraums einen spitzen Winkel von 0 - 15°, insbesondere 1 - 10°, auf. Damit kann mit der Finne das hydraulisch abbindbare Gemisch beim Durchleiten lokal aufteilt werden. Zugleich wird das Risiko einer Verstopfung im Bereich der Finne stark reduziert.

Gemäss einer besonders bevorzugten Ausführungsform steht die Finne schräg zu einer longitudinalen Achse des Hohlraums, so dass die Seitenflächen der Finne schräg zur longitudinalen Achse des Hohlraums stehen. Die Schrägstellung beträgt bevorzugt > 0 - 15°, insbesondere 1 - 10°. Dadurch kann die Mischwirkung nochmals verbessert werden.

Weiter hat es sich als vorteilhaft erwiesen, wenn die Finne gekrümmt ist, insbesondere so, dass die erste Seitenfläche als konkave Fläche ausgestaltet ist und die zweite Seitenfläche als konvexe Seitenfläche ausgestaltet ist.

Die Anströmkante der Finne weist bevorzugt einen Winkel von 20 - 60° zur longitudinalen Achse des Hohlraums auf und/oder die Hinterkante weist einen Winkel von 80 - 90° zur longitudinalen Achse des Hohlraums auf.

Die Öffnung zum Einleiten des Zusatzmittels ist bevorzugt an der Hinterkante der Finne angeordnet.

Eine Querschnittsfläche im Hohlraum der erfindungsgemässen Vorrichtung, ohne Berücksichtigung des oder der strömungsbeeinflussenden Elemente, beträgt vorzugsweise 100 - 1'500 cm², insbesondere 500 - 1'200 cm², im Speziellen 600 - 800 cm² oder ca. 706 cm². Ein Durchmesser des Hohlraums an der weitesten Stelle beträgt vorzugsweise 50 - 300 mm, insbesondere 80 - 250 mm, im Speziellen 120 - 180 mm oder 150 mm.

Bevorzugt verfügt die Vorrichtung an der stromaufwärtigen Seite und/oder an der stromabwärtigen Seite über Verbindungselemente. Die Verbindungselemente sind bevorzugt zum Anschluss an Rohrleitungen und/oder zur Verbindung von mehreren erfindungsgemässen Vorrichtungen untereinander ausgelegt. Die Verbindungselemente können z.B. in Form von Flanschen, Klammern und/oder Elementen von Schraubverbindungen vorliegen.

Gemäss einer vorteilhaften Ausführungsform liegen wenigstens zwei, insbesondere wenigstens drei, besonders bevorzugt wenigsten vier, in longitudinaler Richtung des Hohlraums voneinander beanstandete strömungsbeeinflussende Elemente vor. Dabei handelt es sich bevorzugt bei jedem der strömungsbeeinflussenden Elemente um eine Finne, insbesondere eine dreieckförmige Finne, im Speziellen eine schräg stehende und/oder gekrümmte Finne, wie sie vorstehend beschrieben ist.

Durch mehrere hintereinander geschaltete strömungsbeeinflussende Elemente kann die Mischwirkung signifikant gesteigert werden.

Die wenigstens zwei strömungsbeeinflussenden Elemente ragen bevorzugt aus verschiedenen radialen Richtungen in den Hohlraum hinein.

Die radialen Richtungen der wenigstens zwei strömungsbeeinflussenden Elemente weisen zueinander bevorzugt einen Winkel von 360°/(Anzahl der strömungsbeeinflussenden Elemente) auf. Bei zwei strömungsbeeinflussenden Elementen beträgt der Winkel insbesondere 180°, bei drei strömungsbeeinflussenden Elementen 120° und bei vier strömungsbeeinflussenden Elementen 90°.

Eine derartige Anordnung kommt der Mischwirkung zu Gute. Prinzipiell sind aber auch unregelmässige Anordnungen mit anderen Winkeln möglich.

Im Besonderen umfasst die Vorrichtung wenigstens zwei, insbesondere wenigstens drei, bevorzugt wenigstens vier, lösbar miteinander verbindbare einzelne Vorrichtungen wie sie vorstehend beschrieben sind. Die Vorrichtungen sind dabei derart ausgelegt, dass sie in verbundenem Zustand mit ihren rohrförmigen Hohlräumen miteinander kommunizieren.

In diesem Fall kann die Vorrichtung als Gerätesatz umfassend wenigstens zwei, insbesondere wenigstens drei, bevorzugt wenigstens vier, lösbar miteinander verbindbare einzelne Vorrichtungen wie sie vorstehend beschrieben sind, vorliegen. Der Gerätesatz kann nebst den wenigsten zwei erfindungsgemässen Vorrichtungen zusätzliche Verbindungsvorrichtungen zum Verbinden der erfindungsgemässen Vorrichtungen untereinander und/oder mit Drittelementen enthalten. Ebenfalls kann der Gerätesatz beispielsweise einen oder mehrere Rohrabschnitte enthalten, insbesondere Rohrabschnitte wie sie nachfolgend im Zusammenhang mit der erfindungsgemässen Anordnung beschrieben sind.

Bei mehreren lösbar miteinander verbindbaren Vorrichtungen bzw. einem Gerätesatz lässt sich die Mischwirkung und die Zugabe des Zusatzmittels flexibel an spezifische Gegebenheiten anpassen.

Ein weiterer Aspekt der vorliegenden Erfindung betrifft eine Anordnung, insbesondere zum Fördern eines hydraulisch abbindbaren Gemischs, umfassend wenigstens eine Vorrichtung wie sie vorstehend beschrieben ist, wobei an der stromabwärtigen Seite und/oder an der stromaufwärtigen Seite ein Rohrabschnitt angeordnet ist, wobei der Rohrabschnitt zumindest in einem Abschnitt einen freien Innenquerschnitt aufweist, welcher geringer ist als der innere Querschnitt des Hohlraums der erfindungsgemässen Vorrichtung.

Bevorzugt ist der freie Innenquerschnitt im Rohrabschnitt an der engsten Stelle im Vergleich mit der Querschnittsfläche im Hohlraum der erfindungsgemässen Vorrichtung, ohne Berücksichtigung des oder der strömungsbeeinflussenden Elemente, um einen Faktor 0.2 - 0.8, insbesondere 0.3 - 0.5, kleiner. Ein Durchmesser des Rohrabschnitts an der engsten Stelle ist im Vergleich mit der Querschnittsfläche im Hohlraum der erfindungsgemässen Vorrichtung bevorzugt um einen Faktor 0.4 - 0.9, insbesondere 0.5 - 0.7, kleiner.

Eine Querschnittsfläche im Rohrabschnitt an der engsten Stelle beträgt vorzugsweise 100 - 600 cm², insbesondere 200 - 400 cm², im Speziellen 300 - 350 cm² oder ca. 314 cm². Ein Durchmesser des Rohrabschnitts an der engsten Stelle beträgt vorzugsweise 30 - 300 mm, insbesondere 50 - 200 mm, im Speziellen 80 - 120 mm oder 100 mm.

Bevorzugt ist an der stromabwärtigen Seite ein sich bezüglich dem freien Innenquerschnitt in Strömungsrichtung verjüngender Rohrabschnitt angeschlossen. Insbesondere ist der freie Innenquerschnitt im Rohrabschnitt konisch verjüngt.

Es hat sich gezeigt, dass durch die Kombination der erfindungsgemässen Vorrichtung mit dem sich verjüngenden Rohrabschnitt die Mischwirkung nochmals gesteigert werden kann, so dass rascher bzw. innerhalb einer kürzeren Strecke eine homogenere Verteilung des Zusatzmittels erreicht wird.

Bevorzugt verkleinert sich der freie Innenquerschnitt im sich verjüngenden Rohrabschnitt um einen Faktor 0.2 - 0.8, insbesondere 0.3 - 0.5, dies insbesondere über einer Länge von 0.25 - 2 m, bevorzugt 0.5 - 1.5 m. Damit kann einerseits eine zusätzliche Vermischung des Zusatzmittels erreicht werden. Andererseits kann das Risiko von Verstopfungen tief gehalten werden.

Weiter ist es bevorzugt, wenn zugleich an der stromaufwärtigen Seite ein sich bezüglich dem Innenquerschnitt entgegen der Strömungsrichtung verjüngender zweiter Rohrabschnitt angeschlossen ist, wobei sich der zweite Rohrabschnitt bevorzugt stufenartig verjüngt. Bezüglich Querschnitt und Durchmesser ist der zweite Rohrabschnitt bevorzugt wie vorstehend beschrieben dimensioniert.

Dadurch wird der in die erfindungsgemässe Vorrichtung einströmende Volumenstrom begrenzt, so dass die Gefahr von Verstopfungen im Bereich der strömungsbeeinflussenden Elemente reduziert werden kann.

Ein weiterer Aspekt der vorliegenden Erfindung betrifft die Verwendung einer erfindungsgemässen Vorrichtung oder einer Anordnung wie sie vorstehend beschrieben ist, zur Zugabe und Einmischung eines Zusatzmittels in ein hydraulisch abbindbares Gemisch. Das hydraulisch abbindbare Gemisch ist dabei wie vorstehend beschrieben definiert. Im Besonderen handelt es sich um eine Beton- oder Mörtelzusammensetzung.

Im Besonderen wird die erfindungsgemässe Vorrichtung oder Anordnung bei der Herstellung von Formkörpern durch additive Fertigung und/oder beim Ausbringen von Spritzbeton oder Spritzmörtel verwendet.

"Additive Fertigung" bezeichnet ein Verfahren, bei welchen durch gezielte räumliche Ablagerung, Aufbringung und/oder Verfestigung von Material ein räumliches Objekt bzw. ein Formkörper erzeugt wird.

Beispielsweise kann die additive Fertigung durch einen in wenigstens einer Raumrichtung bewegbaren Druckkopf erfolgen, wobei das hydraulisch abbindbare Gemisch vor dem Austritt aus dem Druckkopf durch eine erfindungsgemässe Vorrichtung oder Anordnung geleitet wird.

Die additive Fertigung kann beispielsweise wie in der EP 3 558 679 A1 beschrieben erfolgen, wobei zusätzlich oder anstelle der in Fig. 1 dargestellten Dosiervorrichtung 21, zur Zugabe eines Erhärtungsbeschleunigers eine erfindungsgemässe Vorrichtung oder Anordnung in die Zuleitung zwischen Pumpe 25 und Druckkopf 20 geschaltet wird.

Ein Verfahren zum Aufbringen von Spritzbeton oder Spritzmörtel kann z.B. ein Trocken- oder Nassspritzverfahren sein. Dabei wird die erfindungsgemässe Vorrichtung oder Anordnung vor der Spritzdüse angeordnet.

Im Speziellen kann das Verfahren zum Aufbringen von Spritzbeton oder Spritzmörtel ein Verfahren sein, wie es in der WO 2015/034438 A1 beschrieben ist. Dabei wird der Spritzbeton oder Spritzmörtel in ein vorgefertigtes Geflecht, welches als Schalung dient, gespritzt und zu einem Formkörper aufgebaut.

Weiter betrifft die Erfindung ein Verfahren zur Zugabe und Einmischung eines Zusatzmittels in ein hydraulisch abbindbares Gemisch mit einer erfindungsgemässen Vorrichtung oder einer Anordnung wie sie vorstehend beschrieben ist, wobei das Zusatzmittel über die in den Hohlraum mündende Öffnung in das hydraulisch abbindbare Gemisch eingeleitet wird.

Das Verfahren ist im Besonderen für die Herstellung von Formkörpern durch additive Fertigung und/oder für das Ausbringen von Spritzbeton oder Spritzmörtel geeignet.

Im Besonderen wird das Zusatzmittel beim erfindungsgemässen Verfahren in Abhängigkeit des Volumenstroms des sich durch die Vorrichtung geförderten hydraulisch abbindbaren Gemischs zudosiert. Damit kann die Menge des Zusatzmittels präzise dosiert werden, so dass die gewünschte Wirkung unabhängig von der jeweiligen Förderrate des hydraulisch abbindbaren Gemischs im Wesentlichen konstant erreicht wird.

Gemäss einer weiteren vorteilhaften Ausführungsform wird das Zusatzmittel mit einer erfindungsgemässe Vorrichtung enthaltend wenigstens zwei strömungsbeeinflussende Elementen zugegeben, wobei eine erste Teilmenge des Zusatzmittels über ein erstes strömungsbeeinflussendes Element zugegeben wird, während zugleich wenigsten eine weitere Teilmenge über wenigstens ein weiteres der strömungsbeeinflussenden Elemente zugegeben wird.

Es hat sich gezeigt, dass durch die Zugabe von Zusatzmittel in Teilmengen über mehrere strömungsbeeinflussende Elemente eine noch homogenere Verteilung des Zusatzmittels erreicht werden kann.

Weiter ist es vorteilhaft, wenn die Öffnung zum Einleiten des Zusatzmittels an wenigstens einem strömungsbeeinflussenden Element nach Beendigung der Einleitung des Zusatzmittels mit einem Gas, insbesondere Luft, beaufschlagt und/oder ausgeblasen wird. Dies kann z.B. während einem Unterbruch in der Förderung des hydraulisch abbindbaren Gemischs oder nach Beendigung des Verfahrens erfolgen.

Damit kann insbesondere durch den Gasdruck verhindert werden, dass hydraulisch abbindbares Gemisch in die Öffnung(en) eintritt und diese verstopft.

Im Folgenden sind verschiedene Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Kurze Beschreibung der Figuren

Die zur Erläuterung der Ausführungsbeispiele vorliegenden Zeichnungen zeigen:
- Fig. 1: eine perspektivische Ansicht einer erfindungsgemässen Vorrichtung zur Zugabe und Einmischung eines Zusatzmittels in ein hydraulisch abbindbares Gemisch mit einer gekrümmten, dreieckförmigen Finne als strömungsbeeinflussendes Element;
- Fig. 2: eine Aufsicht auf die stromabwärtigen Seite der Vorrichtung aus Fig. 1;
- Fig. 3: einen Schnitt entlang der Linie B - B aus Fig. 2;
- Fig. 4: eine Aufsicht auf die Vorrichtung aus den Fig. 1 - 3 in Richtung des Fluideinlasses über welchen ein Zusatzmittel zugeführt werden kann;
- Fig. 5: eine Anordnung mit einer Vorrichtung aus den Fig. 1 - 4 in schematischer Darstellung wobei am stromabwärtigen Ende ein sich bezüglich dem freien Innenquerschnitt in Strömungsrichtung konisch verjüngender Rohrabschnitt angeschlossen ist und am stromaufwärtigen Ende ein zweiter Rohrabschnitt angeschlossen ist, welcher sich entgegen der Strömungsrichtung stufenartig verjüngt;
- Fig. 6: eine weitere Anordnung umfassend einen Satz von vier baugleichen und miteinander verbundenen Vorrichtungen, wie sie in den Fig. 1 - 4 dargestellt ist, mit daran angeschlossenen Rohrabschnitten;
- Fig. 7a - d: Varianten der Erfindung mit strömungsbeeinflussenden Elementen in Form von kreiszylindrischen Stutzen, trapezförmigen Finnen und rechteckförmigen Finnen mit unterschiedlich angeordneten Öffnungen zum Einleiten eines Zusatzmittels.

### Beispiele

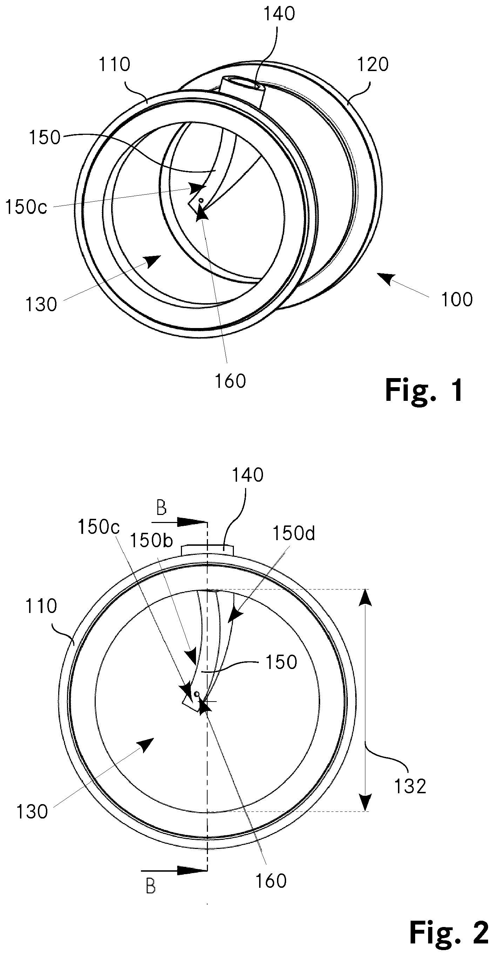

Die Fig. 1 - 4 zeigen eine erfindungsgemässe Vorrichtung 100 zur Zugabe und Einmischung eines Zusatzmittels in ein hydraulisch abbindbares Gemisch.

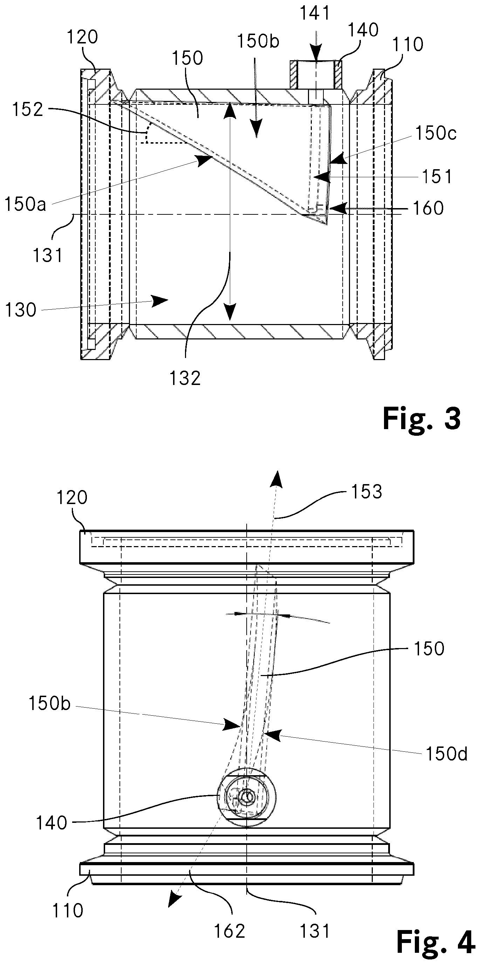

Wie aus Fig. 1 ersichtlich, liegt die Vorrichtung 100 in Form eines kreiszylindrischen Rohrabschnitts mit einem kreiszylindrischen Hohlraum 130 vor, durch welchen ein hydraulisch abbindbares Gemisch entlang der Längssachse 131 (siehe Fig. 3), welche der vorgesehenen Flussrichtung entspricht, durchgeleitet werden kann. Am stromabwärtigen Ende 110 ist liegt ein erster ringförmiger Befestigungsflansch vor, während am stromaufwärtigen Ende 120 ein zweiter ringförmiger Befestigungsflansch vorliegt. Über die Flansche kann die Vorrichtung 100 an weiteren rohrförmigen Elementen angeschlossen werden.

Von der inneren Wandung der Vorrichtung 100 ragt eine dreieckförmige und gekrümmte Finne 150 als strömungsbeeinflussendes Element in den Hohlraum 130. An der stromabwärtigen Hinterkante 150c der Finne 150 ist eine in den Hohlraum 130 mündende Öffnung 160 zum Einleiten eines Zusatzmittels angeordnet.

Das Zusatzmittel kann über einen Fluideinlass 140 im Bereich der Finne 150 und einen durch die Finne 150 durchlaufenden Fluidkanal 151 (siehe Fig. 3) von aussen zur Öffnung 160 geleitet werden.

Fig. 2 zeigt eine Aufsicht auf das stromabwärtige Ende 110 der Vorrichtung 100. Wie aus Fig. 2 erkennbar, ist die Finne 150 entlang ihrer gesamten Höhe bzw. in radialer Richtung gekrümmt. Sie beinhaltet eine konvexe Seite 150d (in Fig. 2 sichtbar) sowie eine gegenüberliegende und konkav gekrümmte Seitenfläche 150b (in Fig. 2 verdeckt; siehe Fig. 4). Die Öffnung 160 zum Einleiten des Zusatzmittels ist in einer Distanz von etwa dem halben Durchmesser 132 von der Wandung des kreiszylindrischen Hohlraums 130 entfernt. Der Durchmesser 132 beträgt z.B. ca. 150 mm.

Im Fig. 3, welche einen Schnitt entlang der Linie B - B aus Fig. 2 zeigt, ist die Dreiecksform der Finne 150 erkennbar. Die Finne 150 verfügt über eine vom stromaufwärtigen Ende 120 schräg in den Hohlraum 130 hinein verlaufende Anströmkante 150a. Der Winkel 152 zwischen Anströmkante 150a und Längsachse 131 bzw. Flussrichtung beträgt z.B. ungefähr 30°. Damit ragt die Finne 150 als strömungsbeeinflussendes Element entlang ihrer in Längsrichtung 131 des Hohlraums 130 verlaufenden Länge kontinuierlich zunehmend weiter in den Hohlraum 130 hinein.

Im Bereich des stromabwärtigen Endes der Finne 150 verläuft die bereits in den Fig. 1 und 2 dargestellte Hinterkante 150c, welche ungefähr senkrecht zur Längsachse 131 steht.

Durch eine Bohrung in der Wandung der Vorrichtung 100 und im Innern der Finne 150 verläuft ein Fluidkanal 151 vom Fluideinlass 140 parallel zur Hinterkante 150c bis zur Spitze der Finne 150. Im Bereich der Spitze der Finne ändert die Richtung des Fluidkanals 151 um 90°, so dass das einzubringende Zusatzmittel 141 in einer Richtung mit einer Hauptkomponente entlang der Längsachse 131 in den Hohlraum 131 eingeleitet werden kann.

Fig. 4 zeigt eine Aufsicht auf die Vorrichtung 100 in Richtung des Fluideinlasses 140. Dabei ist zu erkennen, dass die Finne 150 im Bereich der Wandung des Hohlraums 130 in einer Richtung 153 schräg zur Längsachse 131 des Hohlraums verläuft, wobei die Richtung 153 gegenüber der Längsachse 131 des Hohlraums 130 einen Winkel 153 von ca. 5° aufweist.

Die Öffnung 160 ist derart ausgestaltet, dass ein aus ihr austretender Strom an Zusatzmittel in einer Richtung 162 schrägt zur Längsachse 131 des Hohlraums verläuft. Konkret ist die Ausgestaltung derart, dass das Zusatzmittel in einer Richtung 162 welche einen Winkel ca. 30° zur Längsachse 131 des Hohlraums 130 verläuft, in diesen eingeleitet werden kann.

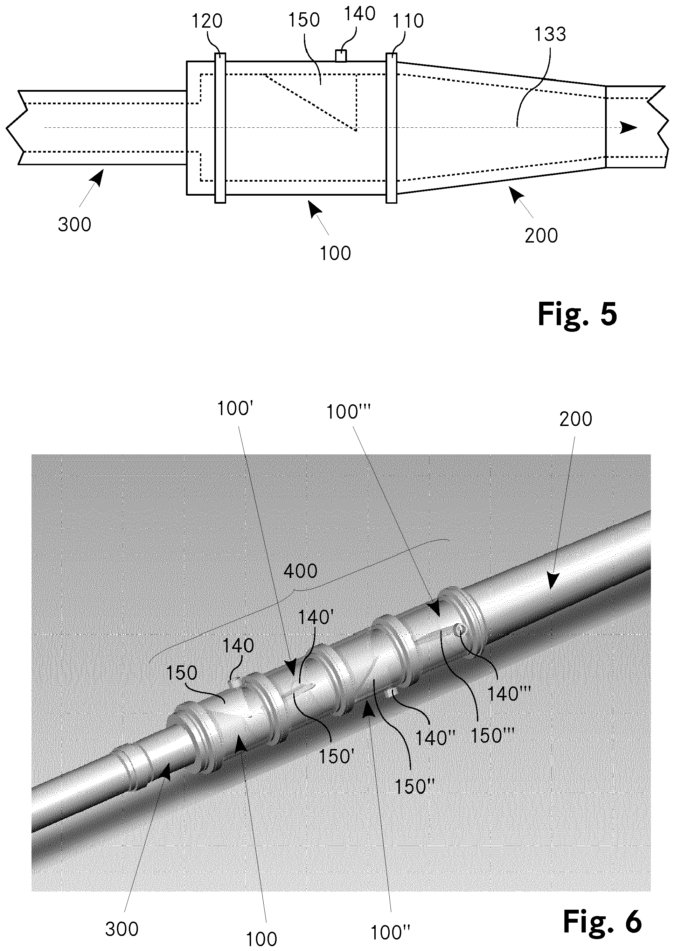

Fig. 5 zeigt eine Anordnung mit einer Vorrichtung 100 aus den Fig. 1 - 4 in schematischer Darstellung wobei am stromabwärtigen Ende 110 ein sich bezüglich dem freien Innenquerschnitt in Strömungsrichtung 133 konisch verjüngender Rohrabschnitt 200 angeschlossen ist. Der Rohrabschnitt 200 hat z.B. eine Länge von 1 m. Im Bereich seines stromaufwärtigen Endes entspricht der Innendurchmesser des Rohrabschnitts 200 dem Durchmesser 132 des Hohlraums 130 der Vorrichtung 100 von ca. 150 mm, während der Innendurchmesser des Rohrabschnitts im engsten Bereich bzw. im Bereich seines stromabwärtigen Endes ca. 100 mm beträgt.

Am stromaufwärtigen Ende 120 der Vorrichtung 100 ist des Weiteren ein zweiter Rohrabschnitt 300 angeschlossen, welcher sich entgegen der Strömungsrichtung 133 stufenartig verjüngt. Im Bereich seines mit der Vorrichtung 100 verbundenen Endes entspricht der Innendurchmesser des Rohrabschnitts 300 dem Durchmesser 132 des Hohlraums 130 der Vorrichtung 100 von ca. 150 mm, während der Innendurchmesser des Rohrabschnitts 300 im verjüngten Bereich bzw. im Bereich seines stromaufwärtigen Endes ca. 100 mm beträgt.

Fig. 6 zeigt eine weitere Anordnung umfassend einen Satz 400 von vier baugleichen miteinander verbundenen erfindungsgemässen Vorrichtungen 100. Die zweite, dritte und vierte der erfindungsgemässen Vorrichtungen sind mit den Bezugszeichen 100', 100", 100"' versehen.

Die vier Vorrichtungen 100, 100', 100", 100'" sind über die jeweiligen Flansche an den Vorrichtungen über Klammern lösbar miteinander verbunden, so dass ein durchgehender zylindrischer Hohlraum entsteht. Die zweite Vorrichtung 100' ist dabei gegenüber der ersten Vorrichtung 100 um 90° um die Längsachse gedreht, so dass die Finne 150' der zweiten Vorrichtung 100' in einem Winkel von 90° zur Finne 150 der ersten Vorrichtung 100 steht. Die dritte Vorrichtung 100" ist entsprechend um weitere 90° gegenüber der zweiten Vorrichtung 100' gedreht und die vierte Vorrichtung 100'" wiederum um weitere 90° gegenüber der dritten Vorrichtung 100". Damit zeigen alle Finnen 150, 150', 150", 150'" in radialer Richtung in vier um 90° verschiedene Richtungen, während sie zugleich in Längsrichtung des Hohlraums voneinander beanstandet sind.

Über die Fluideinlässe 140, 140', 140", 140'" der vier Vorrichtungen 100, 100', 100", 100'" können z.B. Teilströme eines Zusatzmittel, z.B. eines Erstarrungsbeschleunigers, in den Hohlraum bzw. ein darin durchgeleitetes hydraulisch abbindbares Gemisch eingeleitet werden. Es ist aber auch möglich, an jedem der Fluideinlässe 140, 140', 140", 140''' ein anderes Zusatzmittel einzuleiten.

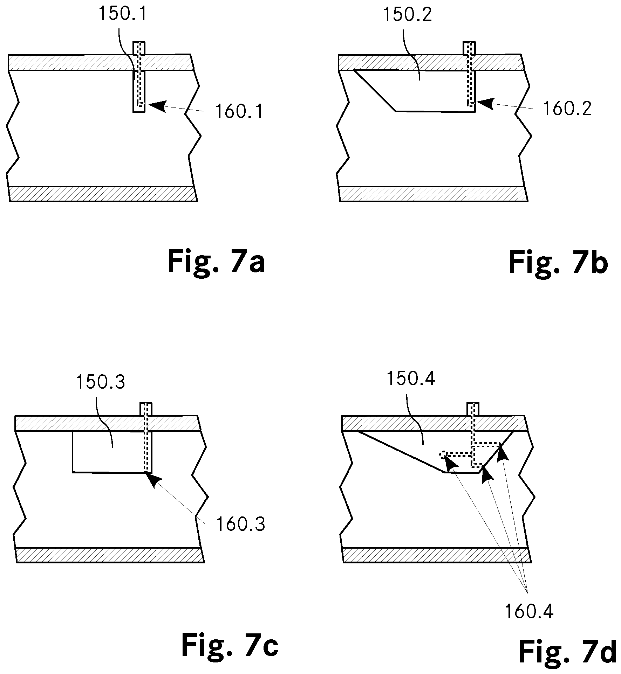

Die Fig. 7a - 7d zeigen Varianten der Erfindung mit anders ausgestalteten strömungsbeeinflussenden Elementen. In Fig. 7a ist das strömungsbeeinflussende Element ein kreiszylinderförmiger Stutzen 150.1, welcher im Bereich seines freien Endes an der Mantelfläche eine Öffnung 160.1 zum Einleiten eines Zusatzmittels aufweist.

Bei der Variante aus Fig. 7b ist das strömungsbeeinflussende Element als Finne 150.2 in Form eines rechtwinkligen Trapezes ausgebildet, wobei die Öffnung 160.2 zum Einleiten des Zusatzmittels an der stromabwärtigen Hinterkante vorliegt.

Fig. 7c zeigt eine Variante mit einer rechteckförmigen Finne 150.3. Die Öffnung 160.3 zum Einleiten des Zusatzmittels befindet sich dabei an der Unterkante der Finne, so dass das Fluid in radialer Richtung in den Hohlraum eingeleitet werden kann.

In Fig. 7d ist das strömungsbeeinflussende Element eine Finne 150.4 in Form eines allgemeinen Trapezes ohne rechten Winkel. In diesem Fall kann das Zusatzmittel über drei Öffnungen 160.4 eingeleitet werden. Zwei der Öffnungen befinden sich auf unterschiedlichen Höhen an der stromabwärtigen Hinterkante und eine Öffnung befindet sich auf der Seitenfläche.

Weiter wurden Tests mit verschiedenen Anordnungen durchgeführt, um den Einfluss der strömungsbeeinflussenden Elemente zu untersuchen.

| | |
|---|---|
| Versuch 1: | Es wurde eine Betonzusammensetzung durch eine Anordnung wie sie in Fig. 6 dargestellt ist, mit konstanter Durchflussrate durchgepumpt. Dabei wurde über die Einlässe 140, 140', 140", 140'" ein mit rotem Farbstoff versetzter Erhärtungsbeschleuniger mit konstanter Zufuhrrate zugegeben und eingemischt. Die so |
| | erzeugte Mischung wurde in ein an den Rohrabschnitt 200 abgeschlossenes Testrohr abgefüllt und aushärten gelassen. Nach erfolgtem Aushärten wurde der im Testrohr befindliche Betonkörper quer aufgeschnitten und die Querschnittsfläche optisch analysiert. |
| Versuch 2: | Es wurde wie bei Versuch 1 vorgegangen. Die Finnen 150, 150', 150", 150'" wurden aber durch ungekrümmte Finnen gleicher Dimension ersetzt, welche parallel zur Längsachse ausgerichtet wurden bzw. keine Schrägstellung aufwiesen. |
| Versuch 3: | Es wurde wie bei Versuch 1 vorgegangen. Die Finnen 150, 150', 150", 150''' wurden jedoch durch strömungsbeeinflussende Elemente ersetzt wie Sie in Fig. 7a dargestellt sind. |
| Versuch 4: | Es wurde wie bei Versuch 1 vorgegangen. Die Finnen 150, 150', 150", 150'" wurden in diesem Fall vollständig entfernt, so dass der Beschleuniger lediglich durch Bohrungen in der Wandung der Vorrichtungen 100, 100', 100", 100'" eingeleitet wurde. |

Alle Versuche wurden abgesehen von den unterschiedlichen strömungsbeeinflussenden Elementen unter identischen Bedingungen durchgeführt.

Die Homogenität der Verteilung des roten Farbstoffs, welche ein Mass für die Verteilung des Erhärtungsbeschleunigers darstellt, wurde optisch beurteilt. Konkret wurde das Verhältnis von eingefärbter Querschnittsfläche zu nicht eingefärbter Querschnittsfläche bestimmt und mit einer Skala von 1 (schlecht) bis 6 (sehr gut) bewertet. Tabelle 1 gibt einen Überblick über die erzielten Resultate.

**Tabelle 1: Testresultate**

| **Versuch** | **Strömungsbeeinflussendes Element** | **Bewertung** |
|---|---|---|
| **1** | Gekrümmte schräg stehende | 5.33 |
| | Dreiecksfinne | |
| **2** | Ungekrümmte und gerade stehende | 5.25 |
| | Dreiecksfinne | |
| **3** | kreiszylinderförmiger Stutzen | 4.83 |
| **4** | - | 2.96 |

Die Testversuche zeigen, dass die erfindungsgemässe Zugabe und Einmischung eines Zusatzmittels mithilfe von strömungsbeeinflussenden Elementen im Vergleich mit herkömmlichen Lösungen (Versuch 4) eine signifikant homogenere Verteilung des Zusatzmittels einer hydraulisch abbindbaren Zusammensetzung ergibt. Besonders vorteilhaft sind dabei strömungsbeeinflussende Elemente in Form von Finnen (Versuche 1 und 2), insbesondere wenn diese gekrümmt sind und schräg stehen (Versuch 1).

Die erfindungsgemässen Anordnungen wurde des Weiteren in additiven Fertigungsverfahren wie in der EP 3 558 679 A1 beschrieben eingesetzt und erfolgreich getestet. Ebenso wurden die erfindungsgemässen Anordnungen erfolgreich zum Aufbringen von Spritzbeton in Verfahren wie, sie in der WO 2015/034438 A1 beschrieben sind, getestet.

Die vorstehend gezeigten Ausführungsbeispiele sind jedoch nicht einschränkend zu verstehen und können im Rahmen der Erfindung beliebig abgewandelt werden.

## Patentansprüche

1. Vorrichtung (100) zur Zugabe und Einmischung eines Zusatzmittels in ein hydraulisch abbindbares Gemisch, umfassend einen rohrförmigen Hohlraum (130) zum Durchleiten des hydraulisch abbindbares Gemischs entlang einer vorgesehenen Flussrichtung (133), wobei ein statisches strömungsbeeinflussendes Element (150) in den Hohlraum (130) hineinragt, an welchem eine in den Hohlraum (130) mündende Öffnung (160) zum Einleiten des Zusatzmittels vorliegt.

2. Vorrichtung nach Anspruch 1, wobei die in den Hohlraum (130) mündende Öffnung (160) derart ausgestaltet ist, dass das Zusatzmittel von einer Wandung des Hohlraums (130) beabstandet in den Hohlraum (130) eingeleitet werden kann.

3. Vorrichtung nach wenigstens einem der vorangehenden Ansprüche, wobei die in den Hohlraum mündende Öffnung (160) derart ausgestaltet ist, dass das Zusatzmittel auf einer stromabwärtigen Seite des strömungsbeeinflussenden Elements (150) in den Hohlraum (130) eingeleitet werden kann.

4. Vorrichtung nach wenigstens einem der vorangehenden Ansprüche, wobei das strömungsbeeinflussende Element (150) über eine von seinem stromaufwärtigen Ende zu seinem stromabwärtigen Ende schräg zur Strömungsrichtung (133) in den Hohlraum (130) hinein verlaufende Anströmkante (150a) verfügt.

5. Vorrichtung nach wenigstens einem der vorangehenden Ansprüche, wobei das strömungsbeeinflussende Element (150) als Finne, insbesondere als dreieckförmige Finne, ausgestaltet ist.

6. Vorrichtung nach Anspruch 5, wobei die Finne schräg zu einer longitudinalen Achse (131) des Hohlraums (130) steht, so dass Seitenflächen (150b, 150d) der Finne schräg zur longitudinalen Achse (131) des Hohlraums (130) stehen und/oder wobei die Finne gekrümmt ist, insbesondere so, dass eine erste Seitenfläche (150b) als konkave Fläche ausgestaltet ist und eine zweite Seitenfläche (150d) als konvexe Seitenfläche ausgestaltet ist.

7. Vorrichtung nach wenigstens einem der Ansprüche 5 - 6, wobei eine Anströmkante (150a) der Finne in einem Winkel von 20 - 60° zur longitudinalen Achse (131) des Hohlraums (130) steht und/oder die Hinterkante (150c) einen Winkel von 80 - 90° zur longitudinalen Achse (131) des Hohlraums (130) aufweist.

8. Vorrichtung nach wenigstens einem der vorangehenden Ansprüche, wobei wenigstens zwei, insbesondere wenigstens drei, besonders bevorzugt wenigstens vier, in longitudinaler Richtung des Hohlraums voneinander beanstandete strömungsbeeinflussende Elemente (150, 150', 150", 150"') vorliegen, wobei bevorzugt die wenigstens zwei strömungsbeeinflussenden Elemente aus verschiedenen radialen Richtungen in den Hohlraum (130) hineinragen.

9. Vorrichtung nach Anspruch 8, wobei die radialen Richtungen der wenigstens zwei strömungsbeeinflussenden Elemente (150, 150', 150", 150'") einen Winkel von 360°/(Anzahl der strömungsbeeinflussenden Elemente) aufweisen.

10. Vorrichtung (400) nach einem der vorangehenden Ansprüche 8 - 9, wobei die Vorrichtung wenigstens zwei, insbesondere wenigstens drei, bevorzugt wenigstens vier, lösbar miteinander verbindbare einzelne Vorrichtungen (100, 100', 100", 100'") nach einem der Ansprüche 1 - 7 umfasst, wobei die Vorrichtungen derart ausgelegt sind, dass sie in verbundenen Zustand mit ihren rohrförmigen Hohlräumen miteinander kommunizieren.

11. Anordnung, insbesondere zum Fördern eines hydraulisch abbindbaren Gemischs, umfassend wenigstens eine Vorrichtung (100, 400) nach einem der vorangehenden Ansprüche, wobei an der stromabwärtigen Seite ein sich bezüglich dem Innenquerschnitt in Strömungsrichtung (133) verjüngender erster Rohrabschnitt (200) angeschlossen ist, wobei sich der Innenquerschnitt im ersten Rohrabschnitt (200) bevorzugt konisch verjüngt, und wobei an der stromaufwärtigen Seite ein sich bezüglich dem Innenquerschnitt entgegen der Strömungsrichtung (133) verjüngender zweiter Rohrabschnitt (300) angeschlossen ist, wobei sich der zweite Rohrabschnitt (300) bevorzugt stufenartig verjüngt.

12. Verwendung einer Vorrichtung nach einem der vorangehenden Ansprüche oder einer Anordnung nach einem der vorangehenden Ansprüche bei der Herstellung von Formkörpern durch additive Fertigung und/oder beim Ausbringen von Spritzbeton oder Spritzmörtel.

13. Verfahren zur Zugabe und Einmischung eines Zusatzmittels in ein hydraulisch abbindbares Gemisch, mit einer Vorrichtung (100, 400) nach einem der vorangehenden Ansprüche oder einer Anordnung nach einem der vorangehenden Ansprüche, wobei das Zusatzmittel über die in den Hohlraum mündende Öffnung (160) in das hydraulisch abbindbare Gemisch eingeleitet wird.

14. Verfahren nach Anspruch 13, wobei das Zusatzmittel mit einer Vorrichtung nach einem der Ansprüche 8 - 9 mit wenigstens zwei strömungsbeeinflussenden Elementen (150, 150', 150"', 150'") zugegeben wird und wobei eine erste Teilmenge des Zusatzmittels über ein erstes strömungsbeeinflussende Element (150) zugegeben wird, während zugleich wenigstens eine weitere Teilmenge über wenigstens ein weiteres der strömungsbeeinflussenden Elemente (150', 150", 150'") zugegeben wird.

15. Verfahren nach einem der Ansprüche 13 - 14, wobei die in den Hohlraum (130) mündenden Öffnungen (160) nach Beendigung der Einleitung des Zusatzmittels mit einem Gas, insbesondere Luft, beaufschlagt und/oder ausgeblasen werden.
